Europäisches Patentamt

European Patent Office

Office européen des brevets

(19)

(11) Publication number: **0 006 883**
**B1**

## (12) EUROPEAN PATENT SPECIFICATION

(45) Date of publication of patent specification: **20.07.83**

(21) Application number: **78900073.4**

(22) Date of filing: **31.07.78**

(86) International application number:
**PCT/US78/00057**

(87) International publication number:
**WO 79/00082 22.02.79 Gazette 79/4**

(51) Int. Cl.³: **B 24 B 13/00, B 23 B 3/28**

(54) **METHOD AND APPARATUS ADAPTED FOR AUTOMATIC OR SEMI-AUTOMATIC FABRICATION OF ULTRA-PRECISION OPHTHALMIC LENSES, E.G., CONTACT LENSES.**

(30) Priority: **02.08.77 US 821162**
**28.07.78 US 928973**

(43) Date of publication of application:
**23.01.80 Bulletin 80/2**

(45) Publication of the grant of the patent:
**20.07.83 Bulletin 83/29**

(84) Designated Contracting States:
**CH DE FR GB SE**

(56) References cited:
**DE - A - 2 706 178**
**DE - A - 2 718 935**
**FR - A - 2 314 006**
**GB - A - 1 488 002**
**US - A - 3 736 818**
**US - A - 3 763 597**
**US - A - 3 835 588**
**US - A - 3 840 993**
**US - A - 3 909 982**
**US - A - 3 913 274**
**US - A - 4 016 784**
**US - A - 4 083 272**

(73) Proprietor: **AUTOMATED OPTICS, INC.**
**Suite 523, Tyrone Towers 1400 66th Street**
**North Saint Petersburg, FL 33710 (US)**

(72) Inventor: **SPRIGGS, Robert Granville**
**4978 62nd Avenue South, Bayway Isle**
**Saint Petersburg, FL 33710 (US)**

(74) Representative: **Parker, Jeffrey et al,**
**Frank B. Dehn & Co. Imperial House 15-19**
**Kingsway**
**London, WC2B 6UZ (GB)**

(56) References cited:
**Design and components in Engineering,**
**September 1970, "Properties of hydrostatic**
**bearings" Seite 18**

**Design and components in Engineering,**
**December 1970, "Gas lubricated bearings",**
**Seite 10**

Courier Press, Leamington Spa, England

## Method and apparatus adapted for automatic or semi-automatic fabrication
## of ultra-precision contact lenses

The present invention relates to apparatus and a method for forming a plurality of optical surfaces, each defined by one or more radii, on an optical lens precursor to yield a lens adapted for proximate contact with an eyeball. It has particular application to the manufacture of contact lenses of plastics material, especially the fabrication of soft or hydrophilic contact lenses where a lens precursor (e.g. button, blank, or even bonnet) is precision machined in the non-hydrated state.

Numerous methods and apparatus are well known for the fabrication of optical surfaces on a variety of optically-efficient materials. Among these materials might be included various grades of glasses and plastics as well as, for reflective optical applications, metals. However, quantitatively, the manufacture of vision-corrective optical articles far outweighs the remaining areas of endeavour in this field. Surprisingly, therefore, it is found that few truly efficient methods and apparatus exist for the manufacture of vision-corrective optical articles; most approaches being rather pragmatic on an individual basis and possessed of anachronistic shortcomings.

Perhaps the routine use of obsolescent technology is most encountered in the manufacture of contact lenses for the correction of vision defects, and including the manufacture of the new, soft or hydrophilic polymeric contact lenses. With the modern shift from eyeglasses to contact lenses, the first generation hard synthetic plastic or glass-type contact lenses were initially fabricated based upon mere industrially-acceptable and conventional techniques. Thus, the hard plastic (typically polymethylmethacrylate or "PMMA") or glass lens precursors were formed in a rough state, ground, and subsequently polished either manually, or semi-manually with the aid of conventionally employed optical polishing machines. Again, with the conversion from hard contact lenses to soft, hydrophilic lenses, antiquated methods and apparatus were perpetuated, notwithstanding the highly significant differing physical and chemical characteristics between these hydrophilic polymers and the materials for which the prior methods and apparatus were initially designed.

One deviation in the manufacture of soft contact lenses emerged in the form of the spin casting of the hydrophilic monomer during the very polymerization process therefor. While clearly a departure from conventional optical machining and polishing, the spin casting technique was found to be but a basically acceptable compromise, required primarily by the very nature of the lens material. Thus, the compromise is regarded as successful only inasmuch as the ease of process control has been fostered, but at the sufferance of optical quality and reproducibility. This is due to the fact that the anterior surface of the finished lens is predicated upon the shape and quality of the mold cavity, while that of the posterior surface is dictated by the centrifugal forces established during the spin casting process as the monomer polymerizes, viscosity, and the like. Because it is recognized that the surface of the eyeball is not uniform, but has a substantially varying rate of curvature generally corresponding to the apical portion of prolate ellipsoids, paraboloids, and hyperboloids, the ability to properly fit a centrifically cast hydrophilic contact lens with the optimum visual acuity is minimized. Moreover, even a centrifugally cast lens must be manually or otherwise edged. Accordingly, this technique has been found to be less than adequate in meeting the needs of the industry in properly balancing the ease of reproducibility and repeatability with the requirements of enhanced optical fit and power and, thus, wearer comfort and optical efficiency of the finished lens, particularly for those with astigmatic defects.

The art has recognized the advisability of producing methods and apparatus for machining or grinding the hydrophilic lens material in a non-swollen or dehydrated physical state. However, these approaches have not yielded a substantially improved finished lens for a number of reasons. Most significantly, the improvements in methods and apparatus heretofore proposed have merely centered about the modification of old technology, rather than an attempt to provide a totally new and improved system or concept which specifically accounts for the physical and chemical vagaries of the hydrophilic materials to be formed. Thus, it is routinely found that, for example, the tolerance limits of the machines employed far exceed those desirable tolerances for the finished product. Consequently, constant operator scrutiny and subsequent, costly rectifying procedures must be employed to yield a precision lens, or to otherwise salvage defective articles.

Furthermore, the very nature of the materials employed in the fabrication of these soft lenses mandates a critical appraisal of current production techniques. For example, in addition to all of the exacting operating procedures necessarily employed in the manufacture of high quality optical articles, the machining of hydrophilic polymers in a non-swollen or anhydrous condition entails process control far beyond that necessary for the analogous machining of glass or hard plastic lenses. For example, the hydration factor must be taken into account since the ultimate shape of the lens in the hydrated state may differ by 15%, or more, from that in the dehydrated state. This further complicates the handling of the lenses during the fabrication steps since even a small amount of moisture, such as that on the tip of an operator's finger, or ambient humidity, can materially, locally swell the lens precursor. Consequently, should the operator touch the lens during the manufacture thereof, perspiration will cause local swelling which will ultimately be machined or polished away during further process steps. When the lens then dehydrates at the local position, an obvious, and oftentimes fatal, flaw results, thus rendering the lens unsuitable for its intended purpose.

Yet other problems are encountered due to the nature of the physical and chemical characteristics and properties of soft contact lenses. For example, soft contact lenses not uncommonly have a greater diameter than the hard lens counterparts. Also not uncommonly, a soft lens extends well into the scleral area of the eyeball, thus transgressing the sensitive limbus. Moreover, due to the changing rate of curvature of not only the cornea but the scleral area, the optimum lens configuration will account for these differences and thus, be provided with a posterior surface which matches this changing rate of curvature of the cornea, jumps the limbus, and rests again on the sclera. And, while the scleral area is less sensitive than the cornea or limbus region, it is also essential that the edge radius of the lens be smooth and contoured to minimize eye irritation during wear. Also, while the posterior surface must account for the aspherical aberrations of the eyeball, the anterior surface must likewise be machined to very exacting tolerances, regardless of whether or not a plus or minus lens is to be yielded, to provide the required optical characteristics for the lens. To adequately account for the demanding designs inherent in quality optical contact lenses, it is thus essential to provide a maximum acceptable gross tolerance on the order of 0.0025 cm, while optical surfaces should exhibit a finish of at least 0.1 microns. Obviously, the greater the number of operating steps or points of human operator intervention, the less realistic become the attainment of these objectives.

Various automated processes, and apparatus therefor, have been proposed in the prior art. For example, U.S. Patent No. 3,913,274 discloses an apparatus, hereinafter referred to as of the kind described, which comprises a first slide supporting a cutting tool, a rotatable spindle having a lens precursor holder and means for automatically indexing said cutting tool into contact with a lens precursor supported in said holder while said precursor is rotated by said spindle whereby to generate said optical surfaces. The disclosed invention is predicated upon an adaptation of a conventional lathe whereby the lens is secured in a rotating spindle which also provides relative motion in two orthogonal directions in a plane perpendicular to the center of rotation of the lathe. The tool bit or grinding wheel is also caused to rotate about a variably controlled pivot point to allow for the cutting or grinding of different curvature radii of the multifocal lens. Appropriate translation of the cutting tool and rotating lens is achieved by means of a digital computer.

While such apparatus are efficient for the manufacture of relatively large lenses, their utility is diminished when the workpiece is reduced to the much smaller size of a contact lens. For example, the column which supports the lens precursor, and which is tilted relative to the rotational axis of the lathe spindle, is not suitable for use as a fixture for supporting and rotating the much smaller contact lens. Moreover, the need to provide substantial superstructure in order to achieve sufficient relative freedom of motion tends to decrease dimensional stability by increasing the number of sources which contribute to dimensional error. Also, it is obvious that significant operator intervention is needed in order to practice the disclosed process, further contributing to potential sources of dimensional instability and lack of reproducibility from lens to lens.

Another apparatus is disclosed in United States Patent No. 3,835,588, relating to a lenticular contact lens lathe. Again, because the apparatus is patterned on a standard contact lens lathe, which has been modified to provide for an orthogonal translation system via cascaded movable carriages, inherent dimensional instability is built within the system. Moreover, it is necessary to cast or otherwise preform the lens precursor with the posterior surface thereof. Consequently, the same disadvantages obtaining with the spin casting of hydrophilic monomers is indigenous to that disclosed process.

Similar apparatus and processes are disclosed in the United States Patents Nos. 3,064,531 and No. 3,100,955, wherein the lens precursor must first be subjected to a substantial preforming operation in order to render the same compatible with a lathe chuck or other conventional securing member. In the case of the former patent, the lens precursor is threaded for insertion within a special chuck having a matting thread. In the case of the latter, the precursor is first formed with a peripheral ear for restraint within a sleeve. Obviously, the preforming steps are highly undesirable.

In an effort to minimize operator intervention by maximizing the number of process steps on a lens blank between mounting and demounting thereof, a quite mechanically exotic apparatus is disclosed in U.S. Patent No. 3,686,796. The machine therein described performs multiple operations, including machining, lapping, edging, and/or polishing a lens which is retained in a rotatable lens holder relatively indexable with respect to a plurality of pivotally mounted spindle heads, each for performing a given operation. Obviously, the complexity of such a machine and the need to provide the great number of separate machine tools which must be accurately registered from step-to-step are highly undesirable from a commercial point of view.

Conventional pantographs and cam followers have been adapted for fabricating contact lenses, but not without suffering many of the problems noted above and without providing the ability to produce high quality articles in reproducible, commercially-acceptable quantities. These deficiencies may be attributed to, for example, the complexity of mechanical linkage, inherent machine and ambient vibrations, the inability to produce an article of better quality than that of the pattern's surface, etc.

Yet a further problem evident with prior art methods and apparatus for forming contact lenses is the inability of the same to yield an edge, as machined, without defects. Consequently, various postforming polishing operations such as those disclosed in U.S. Patents No. 3,032,936 and No. 3,736,115, are necessary. Again, by increasing the number of operations, potential additional sources of error are encountered.

Accordingly, the need exists to provide a scientifically sound concept, method and apparatus for the reproducible, simple, and efficient manufacture of high quality optical surfaces on an optical lens precursor, whereby the number of process steps are minimized and which substantially diminishes the need for human intervention.

In U.S. Patent No. 4,016,784 there is disclosed a numerically controlled machine tool in the form of a lathe having a spindle mounting slide linearly movable along a Y axis and a tool holding slide linearly movable along the X axis, the movements of said slides along their respective axes being effected by electric motors controlled for example by a preprogrammed tape. The machine tool disclosed however is for use in forming large scale engineering parts and is manifestly unsuitable for the high precision work required to form contact lenses.

The final reference made to the prior art is to an article entitled "Gas lubricated bearings" appearing in the December 1970 issue of "Design and Components in Engineering", which discloses the use of air bearings for the rotating spindles of ultra-precision machine tools.

In accordance with the noted and notable deficiencies of prior art methods and apparatus for forming optical surfaces on a lens precursor, it is a primary object of the present invention to provide an automated or semi-automated machine and method which materially increase productivity, reproducibility and efficiency while concomitantly reducing the cost of manufacture of the resulting lenses.

The aforementioned difficulties are overcome in apparatus of the kind described by providing that said first slide is a fluid bearing slide mounted for rectilinear translation along a first axis, that said rotatable spindle is supported on a second fluid bearing slide mounted for rectilinear translation along a second axis orthogonal to said first axis and that said automatically indexing means provides predetermined coordinated movement of said first and second slides along their respective axes.

The advantages offered by this arrangement of the slides are very substantial in terms of accuracy and simplicity of operation, and form the basis for many improvements in construction and operation as set forth in the dependent claims. Particular mention should be made of the provision of lens block fixture means adapted to receive a semi-finished precursor whose posterior surface has been formed by said cutting tool and to automatically mount said semi-finished precursor on a lens block ready for returning to said spindle for the machining of the anterior surface.

The invention also provides an improvement in the method of forming a lens adapted for proximate contact with an eyeball by forming on an optical lens precursor a plurality of optical surfaces each defined by one or more radii comprising supporting said precursor in a holder on a rotatable spindle and automatically indexing a cutting tool mounted on a first slide into contact with the rotating precursor whereby to generate said optical surfaces, which improvement is characterised by mounting the spindle on a second, fluid-bearing, slide mounted for rectilinear translation along an axis orthogonal to a first axis along which the first slide which is fluid-borne, is rectilinearly translatable, and imparting by way of said automatically indexing means predetermined coordinated movement to said first and second slides along their respective axes to generate said surfaces.

In order that the substantial advantages gained by the invention as defined in the claims may be fully appreciated, a preferred embodiment of the apparatus and method according to the invention will now be described by way of example with reference to the accompanying drawings in which:—

Figure 1 is a perspective illustration of the microinch surface generating apparatus of the present invention, and its associated computer controller;

Figure 2 is a flow diagram of the process of the present invention, and shows schematically the configuration of a lens as it is formed during this process;

Figure 3 is a side elevational view of the lens blocking apparatus of the present invention;

Figure 4 is a top plan view of the lens blocking apparatus of the present invention;

Figure 5 is an exploded, side, fragmentary view taken substantially along the line 5—5 of Figure 3;

Figure 6 is an enlarged view of a finished contact lens; and,

Figure 7 is an even more enlarged view of yet another finished contact lens formed according to the invention.

In order to more fully elucidate upon the various objects and advantages of the present invention, the same will be described in terms of various preferred embodiments thereof. Further along these lines, the invention will be described in terms of the manufacture of a hydrophilic contact lens. However, it will be appreciated that the same are intended as illustrative, and in no wise limitative.

The present invention relates to the formation of optical and complementary surfaces on optically-efficient materials and, more particularly, to the fabrication of hydrophilic contact lenses. The present invention overcomes substantially all of the prior art deficiencies inherent in the use of antiquated methods and apparatus for the manufacture of, e.g., contact lenses and, more specifically, from hydrophilic polymeric materials. That is, the instant method and apparatus minimizes operator handling, while maximizing process efficiency, strict repeatability and product quality.

Currently, apart from the spin casting of hydrophilic contact lenses, small lathes with radius turning attachments, primarily under manual control, are employed as standard production apparatus. And, while the operators need not be skilled in the machinists' sense, they nonetheless require several weeks or months of training before becoming adept enough to generate lenses at a yield of more than, approximately, 25%. Moreover, whether it be attributed to operator skill and/or machine tolerance, accuracy and reproducibility are each quite low thus necessitating laborious hand polishing to obtain an acceptable finish. Also, the ability to cut curves having other than simple radii is minimized, if not precluded, in light of the foregoing limitations. In sum, the present state-of-the-art of contact lens manufacture is more art than science.

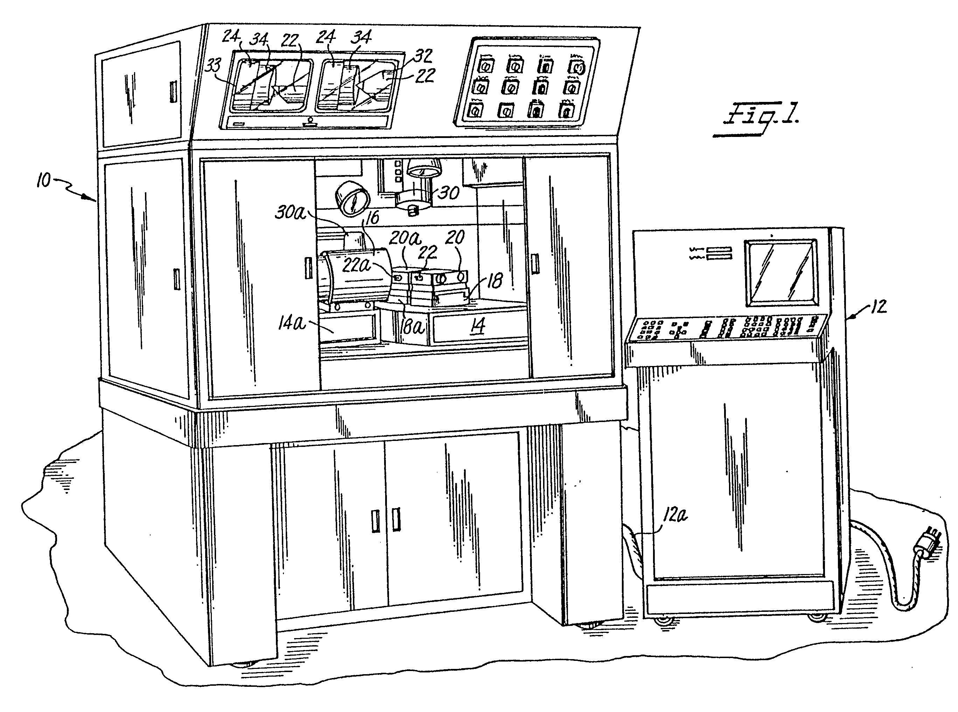

Figure 1 illustrates, perspectively, a microinch surface generator, designated generally as 10, and an associated computer control therefor 12. Numeral 12a designates the electronic interface cable linking the computer 12 to the generator 10. Microinch surface generator 10 is comprised of a fluid-bearing tool support Y-axis table or slide 14 and a fluid-bearing work support spindle motor designated generally as 16. Spindle 16 is itself fixedly mounted upon a second fluid-bearing X-axis positioning table or slide 14a which is disposed perpendicular to the axis of movement of the tool positioning table 14. These fluid-bearing components are gas-bearing structures; most preferably, air-bearing. The table drives (axially reciprocating) are preferably comprised of electronically driven, computer controlled D.C. torque motors, to avert the roughness arising from the use of conventional stepper motors, and which motors are coupled to zero backlash lead screws. The table 14 supports a tool holder base 18, fixedly secured thereto, upon which is borne a tool positioning block 20. The tool positioning block 20 is adapted for axial reciprocation (not shown) along the Z axis, whether manually or otherwise, and advantageously is equipped with both radical and fine adjustments. A suitable cutting tool 22 is firmly attached within the block 20. The tool 22 is, most preferably, an ultra-precision, angularly set, cylindrical diamond-tipped cutting tool, although it might be an ultra-precision rotary tool such as, e.g., a grinding wheel or burring tool. Regardless of the type of cutting tool employed, it is essential, and especially so with respect to the preferred diamond-tipped cutting tool, that the same present a substantially absolutely circular cutting surface to the workpiece of, e.g., non-hydrated hydrophilic polymer. Thus, in the preferred embodiment, the diamond-tipped tool is provided with a circular cutting surface within a tolerance of 0.0025 cm truth of circular profile, preferably within 0.0005 cm truth of circular profile, most preferably within 0.000125 cm truth of circular profile.

In a most preferred embodiment of the invention, the Y-axis table or slide 14 supports a plurality of base/block/tool modules, for example, a base 18/block 20/roughing cut tool 22 module and a base 18a/block 20a/fine cut tool 22a module fixedly spaced apart along a common Y-axis parallel to that of the table 14 and adapted such that after the roughing cut tool 22 has been electronically indexed to the workpiece and done its work, the fine cut tool 22a cut conveniently be electronically relocated in its place for the ultra-precision finishing.

The work support spindle 16 terminates in a work holder, preferably an air collet 24, as viewed in Figure 2. The spindle/motor is fluidly rotatable about a horizontal axis, as is well known to the art.

By employing the fluid-bearing X—Y tables 14 and 14a, in concert with the computerized controller, any complex surface geometry having a circular configuration may be generated, provided the mathematical function describing that geometry is unique in a given quadrant; i.e., any curve which has only one Y for each valve of X. The tables are provided with substantial rigidity to avoid deflection under cutting loads, which is further aided by appropriate provisions for smoothness of operation and freedom from backlash. This is achieved, primarily, by employing a table bed of about 1800 Kg (4000 lbs) in a preferred embodiment by incorporating a granite bed isolated from vibration.

In the illustrated embodiment, both the X and Y slides for tables 14 and 14a are air-bearing slides driven by fine pitch lead screws incorporating self-aligning nuts and D.C. servo motors. Position monitoring is achieved by electro-optical encoders with 0.5 micron resolution. A tachometer is in operative communication with the motors and the computer controller to enhance servo stability.

The spindle 16 is likewise based upon an air-bearing slide to optimize the optical surface finish, as well as to ensure both isolation from vibration and tool life. The spindle motor can be present at any suitable value over the range of from about 1,000 to about 30,000 rpm, and is comprised of an integral drive motor. Radial and axial runout of the spindle/motor are maintained at no greater than 0.000025 cm total indicated run out.

In order to effect accurate pre-positioning between the tool 22 and the workpiece restrained within air collet 24, there are optionally provided a pair of closed circuit television cameras in two mutually orthogonal planes. A first optional camera, 30, in concert with a video display 32 allows the operator to view an enlarged picture of the tool 22 relative to a workpiece 34 in the horizontal plane. A second optional camera 30a is disposed 90° from camera 30, to the rear of the housing for microsurface generator 10, and operates in concert with optional video display 33 for allowing the operator to view an enlarged picture of the tool 22 relative to the workpiece 34 in a vertical plane. In a preferred optional embodiment, the cameras are Panasonic WV-ZOOP CCTV cameras for continuous monitoring of both vertical and horizontal positioning. The video display units are Panasonic No. WV-952 monitors. For contact lens manufacture, the image is optically magnified about 30 times.

The X—Y, fluid-bearing tables 14 and 14a allow relative fluid movement of the tool 22 with respect to the spindle/motor 16 in two orthogonal directions, defining a horizontal X—Y plane. To facilitate tool set-up, the tool positioning block 20 in concert with base 18 provides Z translation of the tool 22 by appropriate operator manipulation. Similarly as regards block 20a, base 18a and tool 22a.

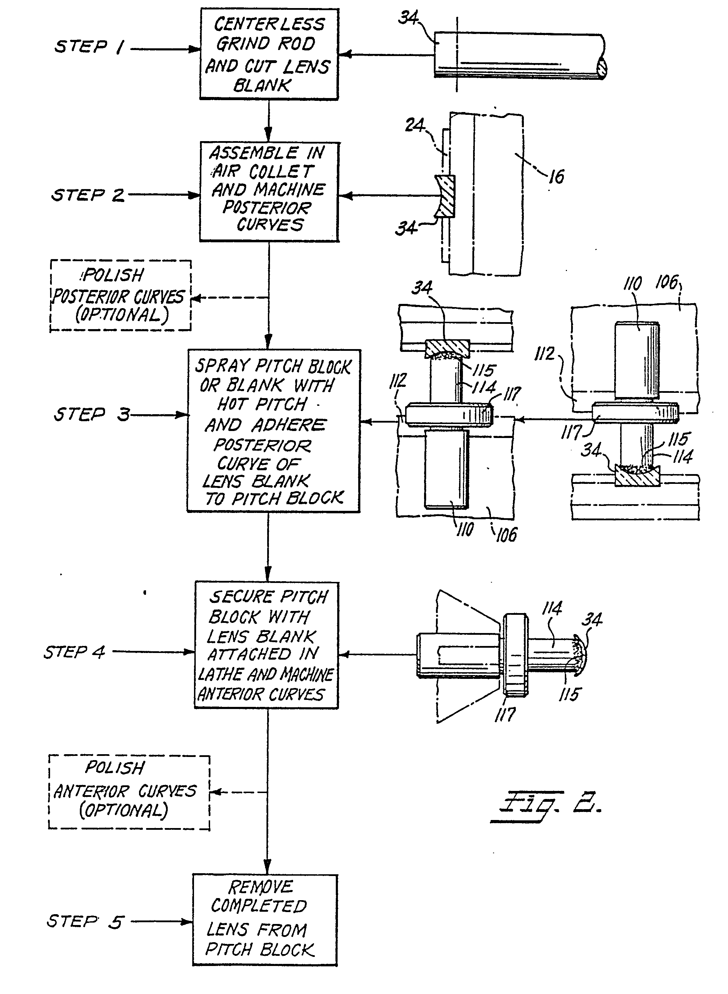

Figures 3—5 illustrate a lens blocking machine, designated generally as 100, which is utilized in concert with the microsurface generator 10, and defines a preferred feature of the overall system. The lens blocking machine 100 is comprised of a rotatable, generally circular table 102, although any of a number of geometries are conceivable. As best viewed in Figure 4, a plurality of rotatable lower spindle assemblies 104 are located equidistantly around the periphery of the table 102, four such assemblies being shown spaced 90° apart. Each of the assemblies 104 is comprised of a stationary base 106 and a rotatable spindle 108. A shaft 110 is in operative communication with spindle 108 for imparting any desired rotational movement thereto. Spindle 108 terminates in an air collet 112 for grasping a preformed lens block 114.

The lens block 114, conventionally termed a "pitch block" in the art, is preferably fabricated from tool steel which is heat treated to exhibit a hardness of about 60 Rockwell/C scale to insure good service life, dimensional stability and minimize damage to the surface area for supporting a lens. The lens blocks are precision ground and lapped to a surface geometry and tolerance better than that prescribed for the finished lens, preferably "better than" by a factor of at least 4—5 times. Thus, there is provided a reusable lens block having both a high service factor along with the ability to very accurately establish precision datum reference points for subsequent lens shaping. Moreover, the automated or semi-automated machine of the present invention is particularly designed for operation with a plurality of lens blocks which will undoubtedly be machined with varying radii of curvature regarding the lens-supporting surface to account for varying lens geometries. Thus, it is further essential that strict uniformity of the overall dimensions of the lens blocks be maintained regardless of differences in that supporting surface, in order to insure reproducibility in establishing a zero datum point for lens generation which insures maintenance of lens center thickness. To achieve this objective, the distance from the back banking surface 117 of the lens block, which locates the lens block in the holder (e.g., collet), to the apex of the radius of the lens-supporting surface must be maintained uniform for all of the lens blocks utilized, within a tolerance limit of ±0.0025 cm, preferably ±0.00125 cm, most preferably ±0.00025 cm.

Disposed adjacent, and projecting vertically above, the assembly 104 is an upper work supporting spindle assembly designated generally as 120. Accordingly, each of the four positions illustrated may be viewed as having the appearance of a small bench press. The assembly 120 is comprised of a vertical support member 122 to which is appended an air actuated carriage for vertical translation of a work supporting spindle 126. The spindle 126 terminates in an air collet 128 for receiving a semi-finished lens which is to be accurately positioned and secured to the lens block 114. Collet 128 may be displaced from an upper load configuration as shown in phantom lines in Figure 3 to a lower assembling configuration by means of the introduction of, for example, compressed gas at metered inlet 130 of gas piston 132. Retraction may be effected by providing reverse bias on the piston and allowing the gas to escape through a metered exit port 133, or by the application of positive pressure through port 133.

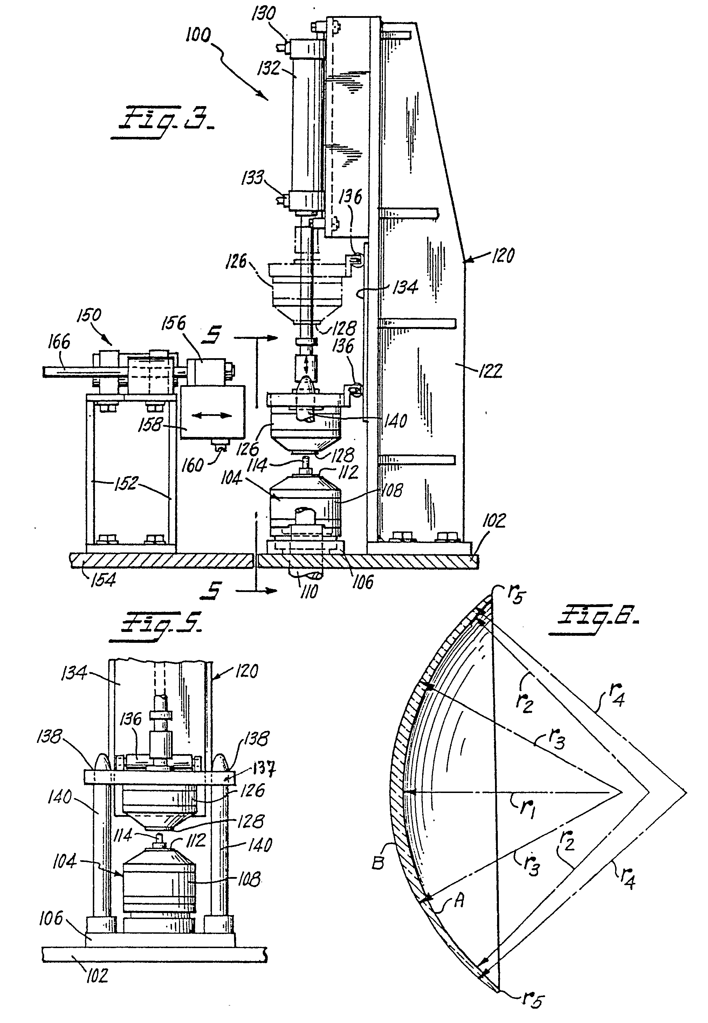

Accurate positioning between the collets 104 and 126 is achieved by causing the latter to translate vertically downwardly along a guide plate 134 borne upon support structure 122, the guide plate cooperating with a roller assembly 136. As best viewed in Figure 5, the upper spindle 126 is further provided with a positioning plate 137 having a pair of apertures 138, which apertures are fitted with bushing members. Cooperating therewith are a pair of opposing guide pins 140 borne upon support plate 106, in association with the lower spindle assembly 104. Thus, as upper spindle 126 is caused to be downwardly displaced by actuation of air piston 132, the guide pins 140 will accurately position the same relative to the lower rotatable spindle 108.

Located proximate the spindle assembly 104 is an adhesive dispenser, designated generally as 150. Any of a number of suitable adhesives may be employed for affixing a lens to the lens block 114, the selection of an appropriate composition being well within the purview of the art. Dispenser 150 is supported by members 152 secured to a base member 154 at a height whereby a reciprocable dispensing assembly 156 may be indexed to a positioning immediately above lower spindle assembly 104. Dispenser assembly 156 is comprised of a dispensing head 158 for heating and containing the adhesive to be dispensed where heating is appropriate, and a dispensing orifice 160. Horizontal translation of the assembly is achieved by movement of a shaft 162 which is controlled, preferably, by an air actuated mechanism (not shown). The shaft 162 terminates in a head member 164, to which are fastened a pair of shafts 166 for guiding the reciprocable assembly 156 during the indexing thereof. Dispensing of adhesive under compression is effected by controlled admission through a fitting 170 and a conduit 172 in communication with suitable reservoir (not shown) into the dispensing head 158, and ultimately through dispensing orifice 160.

Alternatively, as is also generally shown in Figure 2, the lens blocking machine may comprise a single spindle assembly.

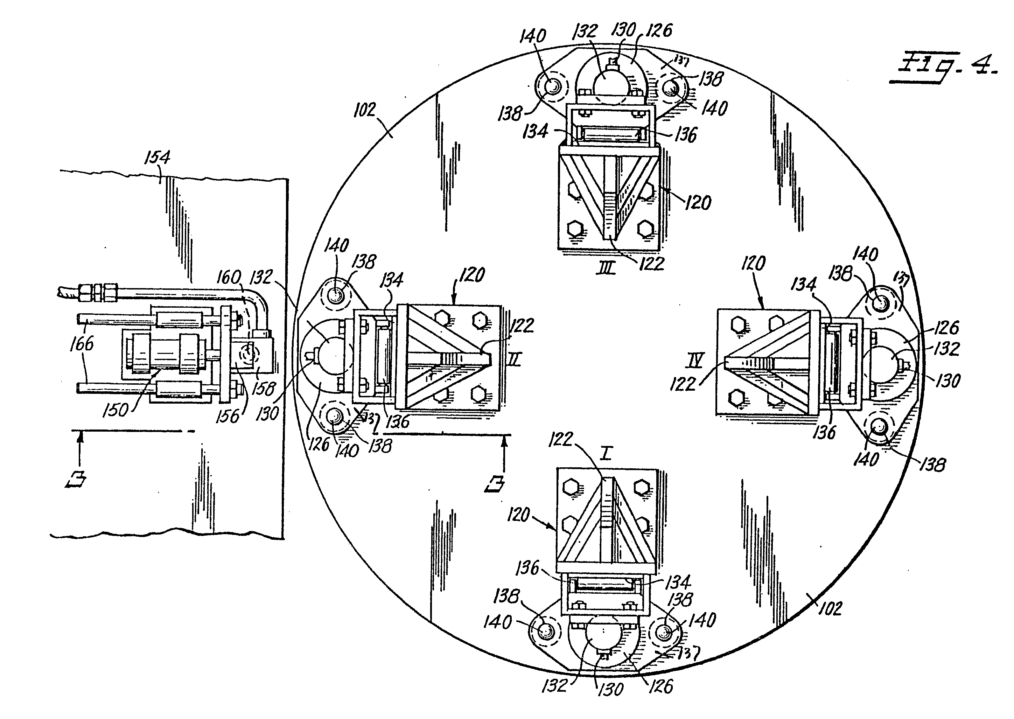

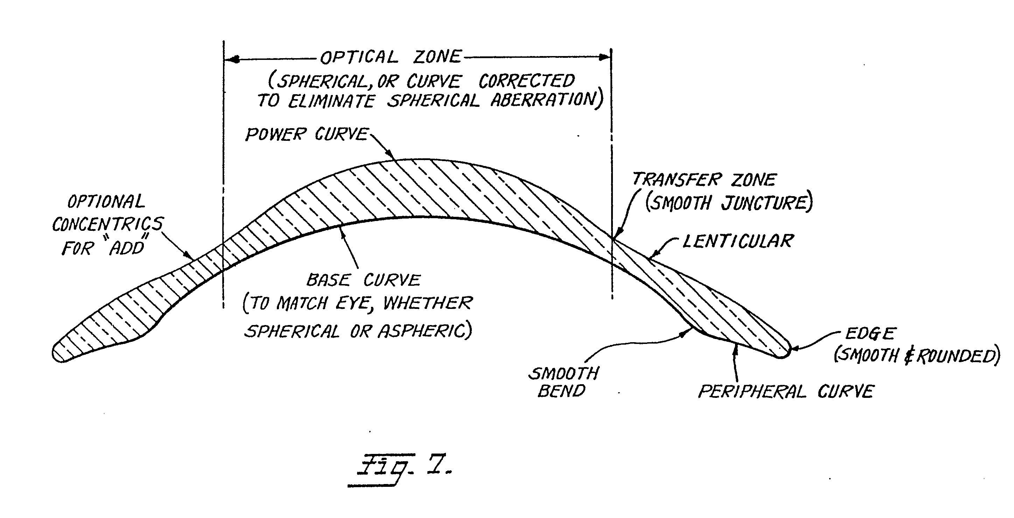

Figure 6 illustrates, in cross-section, a finished contact lens of greatly exaggerated dimensions in order to exemplify the plurality of optical surfaces comprising the lens structure. The lens of Figure 6 is defined as a posterior surface A, including the base curve, and an opposing anterior surface B, including the power curve, each of which is the composite of, optimally, a plurality of optical and complementary surfaces. For the ease of description, the lens of Figure 6 has been divided into major regions having an average radius of curvature denoted as $r_l$; however, the ideal lens will very closely parallel the changing rate of curvature of an eyeball for maximum visual acuity and wearer comfort and will, thus, be comprised of literally hundreds of individual surfaces of varying radius. Indeed, the present invention is expressly directed to the generation of such aspheric optical surfaces, as well as the typically spherical power curves, or combination thereof, and wherein the various individual radii including those of the edge, exhibit a tolerance within 0.001 cm, and preferably within 0.00025 cm. In other words, the posterior surface of the lens is precisely formed for correspondence with the changing rate of curvature of the eyeball by providing a surface comprised of a plurality of discrete optical surfaces with individual posterior radii, each of which is accurate, for correspondence with the eyeball, within a tolerance of 0.0010 cm, preferably of 0.00025 cm. Likewise, the anterior surface is precisely formed for optical resolution (when considered in concert with lens thickness, material, etc.) by similarly providing a surface comprised of discrete optical surfaces with individual anterior radii, each of which is accurate, for optical resolution, within a similar tolerance of 0.00125 cm, preferably of 0.00025 cm. A finished contact lens in accordance with the invention is shown in even greater detail in Figure 7, and whereat it will be seen that, according to the invention, there is no sharp juncture between the power curve and the lenticular (as is the case with all of the prior art lenses). Similarly as regards the blend, which may be sharp, medium or heavy. Moreover, the base curve need not be spherical, but will match the eyeball, whether spherical, aspheric, etc. The power curve may likewise be curve corrected to eliminate spherical aberration. Concentrics (for "add", or otherwise) too are readily formed into the lens according to the invention with no discernible lines or junctures between zones. Thus, bifocal lenses, trifocals, omni-focals, aspheric lenticulars, aspheric lenticular running parallel to an aspheric base, all heretofore unknown to the art, are quite readily formed consistent with the invention. And so too a lens may be shaped having a changing rate of curve with a graduated power change in a transition zone between "distance" and "add".

The significance of the ability of the apparatus of the present invention to yield lenses of such complicated geometrical shapes, in a fundamentally simple and automated or semiautomated manner and yet with an exacting degree of reproducibility, is manifest when one considers the vagaries of eyeball geometries. Optimally, an eyeball would be spherical for maximum optical resolution. However, it is found that only the central portion of the eyeball is even approximately spherical, while it tends to flatten as the radius from center increases. Thus, the eyeball is typically seen to be mathematically described by elliptical, parabolic, and hyperbolic functions. Certain visual defects further compound these complicated geometries.

For example, keratoconus-type defects results in an eyeball configuration exemplified as a cone, wherein the apex corresponds to the central corneal region. Currently, contact lenses have been found to be the only effective device for optical correction of this defect and, typically, the patient will be fitted with a series of lenses to promote, or indeed force, a more spherical shape for the eye. However, the ability to accurately and reproducibly form contact lenses for patients suffering keratoconus-type defects has been elusive, at best, and unsatisfactory as a general proposition. This is because each individual lens must first be roughly formed and then individually, hand polished to provide a tolerable fit on the eyeball. In so fitting the lens, any conceivable reproducibility in the initial shaping is lost completely by the subsequent, trial-and-error polishing technique. This severe condition is completely eliminated by the computerized controlled system according to the invention.

Even considering a "normal" eyeball, the inability to precisely form the posterior surface of the lens by use of present machinery results in the need for the doctor fitting that lens to resort to additional lens polishing or modification to adequately fit the lens to the patient. Again, because of the ad hoc nature of this technique, and conceivable reproducibility is similarly lost. Therefore, should the patient lose or damage a lens, it becomes virtually impossible to match a replacement lens.

The automated or semi-automated machine in accordance with the present invention eliminates all of the disadvantages inherent in the current trial-and-error methods employed. Any complex posterior lens geometry may be accurately and reproducibly generated to maximize not only wearer comfort, but insure stable and strictly reproducible correspondence with the eyeball surface. The anterior surface may then be appropriately formed in order to effectively yield a spherical shape, at least in the optical zone, whereby optical resolution is similarly maximized.

The posterior surface A may be said to be comprised of a central base curve, $r_1$, for contact with the corneal portion of the eyeball. Circumferentially peripheral to the base curve is a secondary curve in order that the lens may, for example, transgress or vault the sensitive limbus and rest on the scleral region of the eyeball. The anterior surface B is likewise formed of a central, power curve having a radius $r_3$, circumferentially bounded by a peripheral curve, $r_4$. The lens terminates at an edge having a radius $r_5$ designed to maximize wearer comfort.

With particular reference to Figure 2, the process of the present invention comprises a series of interrelated, fully automated or semiautomated steps. A suitable hydrophilic polymeric material, preferably that described in United States Patent No. 3,721,657, is first polymerized under anhydrous conditions as illustrated in the patent in the form of a cylindrical rod. Other suitable polymers include those disclosed in United States Patents No. 3,503,942, No. 3,532,679, No. 3,621,079, No. 3,639,524, No. 3,647,736, No. 3,700,761, No. 3,767,731, No. 3,792,028, No. 3,816,571, No. 3,926,892, No. 3,949,021, No. 3,966,847, No. 3,957,362, No. 3,957,740, No. 3,983,083, No. 3,699,089 and No. 3,965,063. The rod or bar is thence subjected to a centerless grinding or comparable exacting machining operation under conditions of acceptable relative humidity, e.g., typically from 30—40%, to accurately render the circumferential surface circular to within, preferably, a diametral tolerance of about 0.001 cm, preferably about 0.00025 cm. From the ground rod is then sectioned a lens blank or precursor 34. (For ease of description, the lens during its various stages of manufacture will be identified with this numeral, 34). The sectioning of the lens precursor 34 may be made in any convenient manner, desirably also under conditions of acceptable relative humidity, but most preferably, by an automatically fed precision lathe equipped with a standard parting tool which is itself machined or dressed to yield precise opposing faces of the lens precursor. The lens precursor or button thus defines a substantially cylindrical rod having opposing end faces and a circumferential face. The diameter of the button is reproducibly maintained within a tolerance of $\pm0.0025$ cm, preferably of $\pm0.0005$ cm, and most preferably of $\pm0.00025$ cm, while the longitudinal axis (thickness) also is reproducibly maintained within a tolerance of $\pm0.0375$ cm, preferably of $\pm0.025$ cm, most preferably of $\pm0.0025$ cm. Perpendicularity of both opposing faces relative to the outside diameter is maintained within $\pm0.00125$ cm, preferably within $\pm0.001$ cm, and most preferably within $\pm0.0005$ cm.

The precision lens precursor 34 is then fed from, for example, a magazine load to the air collet 24 of fluid-bearing spindle/motor 16, most preferably an air-bearing spindle such as those currently marketed by Westwind Air Bearings/Federal-Mogul. Once secured within the spindle, the operator may then precisely align the cutting tool 22 with the exact center of the lens precursor 34, optionally with the aid of optional visual displays 32 and 33. To further assist the operator in so positioning the cutting tool, gradient markings may be provided on the screen of the visual display units, either by way of a transparent overlay or by actually generating an image on the cathode ray tube. Alternatively, the aforesaid precise alignment of the cutting tool with the exact center of the button 34 is accomplished e.g., by physically measuring the tool position and comparing it to a precalibrated standard in the X, Y and Z axes.

Once the operator has so defined the zero datum point for the cutting tool, the computer 12, having appropriately been programmed, will then accurately index the cutting tool 22 vis-avis the spindle/motor 16 by the control of conjoint movement of each of the fluid-bearing X—Y tables 14 and 14a, most preferably airbearing tables such as those currently marketed by Pneumo Precision, Inc. Thus, in a first cutting operation, with both tables in simultaneous computer controlled movement at varying rates of speed, the outside diameter of the desired lens is cut into the lens precursor 34, as well as a portion of the edge radius. Subsequently, the secondary curve and the base curve of posterior surface A are formed as the tool 22 transgresses inwardly of the lens. Preferably, the posterior surface is cut or formed in a series of passes incorporating both roughing and finishing cuts.

Following the complete formation of posterior surface A, the machined optical surfaces may be polished, if needed. However, due to the enhanced accuracy and precision of the machining operation, an optical surface of from about 0.0125 to about 0.1 microns is produced, thus rendering any subsequent polishing step optional.

After the machining of the posterior surface A, the semi-finished lens is removed from the air collet 24 of spindle 16 by any suitable mechanical means. After appropriate quality control checks and inspections, the same is manually delivered to the lens blocking machine 100. The semi-finished lens is delivered to the upper spindle 126 of the machine 100 and is retained within air chuck 128. A preformed, preheated, precision lens block 114 having a machined surface 115 corresponding to the general average radius of curvature of posterior surface A is automatically loaded in rotatable spindle assembly 104 at a first position corresponding to I of Figure 4. It is optimal that the positions of the semi-finished lens and the lens block be reversed. The table is then indexed 90° by an air switch to a position corresponding to II of Figure 4, whereat the lens block is registered adjacent dispensing apparatus 150. The arm 162 is actuated whereby the dispensing orifice 160 is disposed immediately adjacent the upper surface 115 of lens block 114 and a predetermined quantity of adhesive having the correct temperature and viscosity is deposited thereon. (In the alternative "reversed position" embodiment, the adhesive, e.g., hot pitch, is directly applied to the semi-finished lens 34, which is then rotated for even pitch distribution, and thence the head of the lens block engaged therewith and fixedly adhered thereto.)

The arm 162 is then retracted actuating a switch which causes the upper spindle assembly 126 to be displaced vertically downwardly, as described above, whereby the posterior surface A of semi-finished lens 34 is brought into intimate contact with the adhesively-coated lens block 114. Shaft 110 is then caused to rotate a predetermined number of revolutions, such as from about 5 to about 10, in order to evenly distribute a coating of lens adhesive between the surface 114 and A of semi-finished lens 34. In this way, adhesive will adequately account for any negligible differences between the aspheric contour of surface A of lens 34 and the surface 115 of lens block 114. Following this operation, spindle 126 is held in position. The spindle assembly 104 is thence rotated to position III of Figure 4 to allow the adhesive to set or, if heated, to cool to a solidification temperature, followed by an indexing to position IV whereat the lens blocksemi-finished lens assembly is retrieved. Obviously, as the table is indexed through the positions I—IV other lens block assemblies may be fed thereto for affixing other semi-finished lenses as each position is freed upon completion of a given step. Alternatively, all of the foregoing steps may be performed at but a single position.

The lens block/semi-finished lens assembly is then, after appropriate quality controls, manually transferred to air collet 24 of fluid-bearing spindle/motor 16, and the anterior surface B machined substantially as described above with respect to posterior surface A. That is, the fluid-bearing X—Y tables 14 and 14a are positioned by the operator to establish the appropriate reference point between tool 22 and the semi-finished lens 34, followed by the machining of the remainder of the edge radius, the peripheral and/or lenticular curve and the power curve defining the anterior surface B in, preferably, a series of passes incorporating both roughing and finishing cuts. Again, while the apparatus is capable of yielding a surface finish of from about 0.0125 to about 0.1 microns, the anterior surface may optionally be polished to improve the optical quality of the lens, should it be necessary or desirable for a given application. Following the formation of the lens, the lens block, finished lens assembly is automatically retrieved from air collet 24 and the lens demounted and subjected to typical quality control procedures.

When the lens to be produced is for a contact lens application, the optional polishing is neither required nor desired. The lens, as-machined, exhibits excellent optical surfaces for both compatibility with the eyeball surface and optical resolution. As used in the specification and claims, the term "as-machined" connotes a lens which is removed directly from the forming or shaping apparatus and which is not subjected to a secondary or ancillary polishing operation. Such finished lenses produced according to the invention, whether "as-machined" or after having been subjected to any polishing operation, are readied for placement on the human cornea by hydrating the same to a soft, pliable state of equilibrium with normal physiological saline solution. The hydrated lenses are also stored in normal saline solution. Obviously, since the contact lens buttons and the optical elements shaped therefrom consistent with the invention are comprised of synthetic hydrophilic polymers in their anhydrous or non-swollen state, it is desirable to avoid conditions of unacceptable relative humidity throughout each of the processing parameters in order to obviate premature, at least partial hydration.

The computer controller 12 will control all of the automatic functions of not only the microinch surface generator 10, but will also, by insertion of basic prescription data, design total lens geometry, including all of the appropriate optical mathematical parameters necessary for generating the appropriate radii for forming the posterior and anterior surfaces of the lens. In addition, the computer will then compute the precise tool coordinates to achieve the predetermined continuous path for the lens geometry and sequence through the various steps necessary to yield the desired lens configuration. For example, the insertion of the keratometer readings of a patient with keratoconus, plus the desired diameter of the lens, the computer will design an aspheric lens for an optimum fit upon that patient's eye. In the production of the anterior surface of such lens, by the insertion of the desired power and optical zone, the computer will establish the appropriate coordinates for optimum vision correction in the optical zone and design an appropriate lenticular relative to the posterior side of the lens.

In order to position the fluid-bearing X—Y tables 14 and 14a, an analog to digital converter or interface may be interposed between the requisite drive means for the table and the computer output.

Optionally, the apparatus according to the invention may be equipped with an X—Y plotter for the following purposes:

(1) For the graphic illustration of the lens being generated by drawing a cross-sectional profile magnified 20 to 100 times to verify the accuracy of the computer input;

(2) Conversely, utilizing the paragraph (1) illustration, by tracing a drawing magnified an exact number of times the size of a desired lens, the computer will control the lens generator and generate a lens surface which is a duplication of the drawing;

(3) By tracing a casting of the eye, or the eyeball itself, the plotter will draw a profile of the cornea greatly magnified and feed the information into the computer for the production of a lens which will be the optimum fit on said cornea;

(4) Trace from a photograph of the eye;

(5) Trace from a template;

(6) If the eye is topographically mapped, then the computerized plotter could draw a cross-section of the desired lens to fit this eye to all comfort degrees and visual acuity, as well as to produce all possible X—Y motions for the generation of the actual contact lens;

(7) Also, if there are any generation errors in processing the lens, the deviations or errors could be entered into the computerized plotter and their actual effects observed during manufacturing to illustrate over or under compensations.

Lastly, by utilizing the combination of the various elements according to the invention, the machining operation is conducted with a minimum of vibration, e.g., no greater than about 10 Hz, and an essentially vibration-free operation of no greater than about 2 to 4 Hz is not uncommon.

While the invention has now been described in terms of certain preferred embodiments, the skilled artisan will appreciate that various changes, substitutions, modifications, and omissions may be made without departing from the spirit thereof. Thus, it will be appreciated that not only are "soft" contact lenses readily shaped according to the invention, but also the "hard" or typically PMMA lenses are likewise readily fabricated. And, indeed, the subject apparatus and computer controller therefor, are capable of designing virtually an infinite number of lens designs, for example, directly from the K readings of a keratometer. Accordingly, it is intended that the scope of the present invention be limited solely by that of the following claims.

**Claims**

1. Apparatus for forming a plurality of optical surfaces, each defined by one or more radii, on an optical lens precursor to yield a lens adapted for proximate contact with an eyeball comprising a first slide (14) supporting a cutting tool (22), a rotatable spindle (16) having a lens precursor holder (24) and means for automatically indexing said cutting tool (22) into contact with a lens precursor supported in said holder (24) while said precursor is rotated by said spindle (16) whereby to generate said optical surfaces characterised in that said first slide is a fluid-bearing slide (14) mounted for rectilinear translation along a first axis, that said rotatable spindle (16) is supported on a second fluid-bearing slide (14a) mounted for rectilinear translation along a second axis orthogonal to said first axis and that said automatically indexing means (12) provides predetermined coordinated movement of said first and second slides (14, 14a) along their respective axes.

2. A machine according to claim 1 characterised in that said lens precursor holder comprises an air collet (24).

3. A machine according to claim 1 or 2 characterised in that the first slide (14) supports a plurality of cutting tools (22, 22a).

4. A machine according to claim 1, 2 or 3 characterised by means for translating the or each cutting tool (22, 22a) in a direction orthogonal to both said first and second axes.

5. A machine according to any of the preceding claims characterised in that said rotatable spindle (16) is an air bearing spindle.

6. A machine according to any of the preceding claims characterised in that said automatically indexing means comprises a controlling computer (12).

7. A machine according to any of the preceding claims characterised in that the or each cutting tool (22, 22a) includes a diamond tip having a circular cutting surface within a tolerance of 0.0127 cm truth of circular profile.

8. A machine according to any of the preceding claims characterised in that said automatic indexing means includes encoders with no greater than 0.5 micron resolution.

9. A machine according to any of the preceding claims characterised by means for controlling the radial and axial runout of the rotating spindle at no greater than 0.000025 cm total indicated runout.

10. A machine according to any of the preceding claims characterised by video display means (32, 33) and associated camera means (30, 30a) adapted to permit viewing of an enlarged picture of the or each tool relative to the lens precursor.

11. A machine according to any of the preceding claims further including an X—Y plotter.

12. A machine according to any of the preceding claims characterised by lens block fixture means (100) adapted to receive a semi-finished precursor whose posterior surface (A) has been formed by said cutting tool (22, 22a) and to automatically mount said semi-finished precursor on a lens block (114) ready for returning to said spindle (16) for the machining of the anterior surface (B).

13. A machine according to claim 12 characterised in that said lens block fixture means (100) includes a turntable (102) having a plurality of angularly spaced operating stations (120) each having means (128) for supporting a semi-finished lens, means (112) for grasping a lens block (114), and means (132) for effecting relative movement between said supporting means (128) and said grasping means (112) whereby to deposit said semi-finished lens on said block (114).

14. A machine according to claim 13 characterised by means (150) for automatically depositing adhesive on said lens block (114) adjacent one operational position of said stations (120).

15. A machine according to claim 12 characterised in that said lens block fixture means comprises a plural stage relatively indexable fixture table (102) including at least one rotatable lens block spindle means (104), means (150) for depositing a predetermined quantity of adhesive on a lens block (114) positioned within said lens block spindle means (104), translatable semi-finished lens fixture means (128) for securing said semi-finished lens (34) and displacing the same to proximate contact with the lens block (114) positioned within said lens block spindle means (104), and means for rotating said lens block spindle means (104) when said semi-finished lens (34) and lens block (114) bearing said adhesive are in said proximate contact.

16. A machine according to claim 15 characterised in that said translatable fixture means comprises collet means (128) for receiving and accurately positioning said semi-finished lens (34) with said posterior surface (A) oriented outwardly thereof, and means (130, 132, 133) for vertically translating said collet means (128) for effecting said proximate contact.

17. A machine according to any of the preceding claims characterised by automatic loading means for introducing said precursors into said spindle (16).

18. A machine according to claim 17 characterised in that said loading means comprises a hopper feed loading member and in that said spindle (16) includes a collet (24) for receiving said precursor (34) from said loading member.

19. A method of forming a lens adapted for proximate contact with an eyeball by forming on an optical lens precursor a plurality of optical surfaces each defined by one or more radii comprising supporting said precursors in a holder on a rotatable spindle and automatically indexing a cutting tool mounted on a first slide into contact with the rotating precursor whereby to generate said optical surfaces, characterised by mounting the spindle (16) on a second, fluid-bearing, slide (14a) mounted for rectilinear translation along an axis orthogonal to a first axis along which the first slide (14), which is fluid-borne, is rectilinearly translatable, and imparting by way of said automatically indexing means (12) predetermined coordinated movement to said first and second slides (14, 14a) along their respective axes to generate said surfaces.

20. A method according to claim 19 characterised by controlling said coordinated rectilinear translation by means of a computer (12).

21. A method according to claim 19 or 20 characterised by generating said optical surface along a predetermined path of infinite resolution.

22. A method according to claim 20 or 21 characterised by generating said optical surface via both roughing and precision finishing cuts.

**Patentansprüche**

1. Apparat zur Bildung einer Vielzahl optischer Flächen, jede durch einen oder mehrere Radien umgrenzt, auf einem optischen Linsenvorläufer, um eine Linse bereitzustellen, die für den unmittelbaren Kontakt mit einem Augapfel angepaßt ist, bestehend aus einem ersten Schlitten (14), der ein Schneidwerkzeug (22) trägt, einer drehbaren Spindel mit einem Linsenvorläufer-Halter (24), und einer Einrichtung, um das besagte Schneidwerkzeug (22) automatisch mit einem in besagtem Halter (24) getragenen Linsenvorläufer in Kontakt zu schalten, während der besagte Vorläufer durch die besagte Spindel (16) gedreht wird, um dadurch die besagten optischen Flächen zu generieren, dadurch gekennzeichnet, daß der besagte erste Schlitten ein für geradlinige Translation entlang einer ersten Achse montierter flüssigkeitsgelagerter Schlitten (14) ist, daß die besagte drehbare Spindel (16) auf einem zweiten, für geradlinige Translations entlang einer zweiten, orthogonal zu besagter ersten Achse verlaufenden Achse montierten, flüssigkeitsführenden Schlitten (14a) getragen wird, und daß die besagte automatisch schaltende Einrichtung (12) eine vorherbestimmte, koordinierte Bewegung der besagten ersten und zweiten Schlitten (14, 14a) entlang ihren jeweiligen Achsen vorsieht.

2. Eine Maschine nach Anspruch 1, dadurch gekennzeichnet, daß der besagte Linsenvorläufer-Halter eine Drucklufteinsatzhülse (24) umfaßt.

3. Eine Maschine nach Anspruch 1 oder 2, dadurch gekennzeichnet, daß der erste Schlitten (14) eine Vielzahl von Schneidwerkzeugen (22, 22a) trägt.

4. Eine Maschine nach Anspruch 1, 2 oder 3, dadurch gekennzeichnet, daß eine Einrichtung für die Translation des oder jedes Schneidwerkzeugs (22, 22a) in einer orthogonal sowohl zur besagten ersten wie auch zweiten Achse verlaufenden Richtung vorgesehen ist.

5. Eine Maschine nach einem der vorausgehenden Ansprüche, dadurch gekennzeichnet, daß die besagte drehbare Spindel (16) eine luftgelagerte Spindel ist.

6. Eine Maschine nach einem der vorausgehenden Ansprüche, dadurch gekennzeichnet, daß die besagte automatisch schaltende Einrichtung einen Regelcomputer (12) umfaßt.

7. Eine Maschine nach einem der vorausgehenden Ansprüche, dadurch gekennzeichnet, daß das oder jedes Schneidwerkzeug (22, 22a) eine Diamantspitze einschließt, die eine kreisrunde Schneidfläche innerhalb einer Toleranz von 0,0127 mm Genauigkeit eines Kreisprofils hat.

8. Eine Maschine nach einem der vorausgehenden Ansprüche, dadurch gekennzeichnet, daß die besagte automatische Schalteinrichtung Codierer mit nicht mehr als 0,5 Mikron Auflösung einschließt.

9. Eine Maschine nach einem der vorausgehenden Ansprüche, dadurch gekennzeichnet, daß eine Einrichtung zum Kontrollieren des radialen und axialen Rundlauffehlers der Drehspindel mit nicht mehr als 0,000025 cm angezeigtem Gesamtrundlauffehler vorgesehen ist.

10. Eine Maschine nach einem der vorausgehenden Ansprüche, dadurch gekennzeichnet, daß Video-Anzeigeeinrichtungen (32, 33) und zugehörige Kamera-Einrichtungen (30, 30a) vorgesehen sind, die eine Betrachtung eines vergrößerten Bildes des oder jedes Werkzeugs relativ zum Linsenvorläufer gestatten.

11. Eine Maschine nach einem der vorausgehenden Ansprüche, dadurch gekennzeichnet, daß weiterhin ein X—Y-Schreiber eingeschlossen ist.

12. Eine Maschine nach einem der vorausgehenden Ansprüche, gekennzeichnet durch eine Linsenblock-Halteeinrichtung (100), die angepaßt ist, um einen halbfertigen Vorläufer aufzunehmen, dessen hintere Oberfläche (A) durch das besagte Schneidwerkzeug (22, 22a) geformt wurde, und um den besagten halbfertigen Vorläufer automatisch auf einem Linsenblock (114) fertig für die Rückkehr zu besagter Spindel (16) für die maschinelle Bearbeitung der vorderen Oberfläche (B) zu montieren.

13. Eine Maschine nach einem der vorausgehenden Ansprüche, dadurch gekennzeichnet, daß die besagte Linsenblock-Halteeinrichtung (100) einen Manipuliertisch (102) mit einer Vielzahl winkelig unterteilter Betriebsstationen (120) einschließt, jede mit einer Einrichtung (128) zum Tragen einer halbfertigen Linse, einer Einrichtung (112) zum Erfassen eines Linsenblocks (114), und einer Einrichtung (132) zur Herbeiführung einer Relativbewegung zwischen der besagten Trageinrichtung (128) und der besagten Greifeinrichtung (112), um dadurch die besagte halbfertige Linse auf dem besagten Block (114) abzusetzen.

14. Eine Maschine nach Anspruch 13, gekennzeichnet durch eine Einrichtung (150) zum automatischen Aufbringen von Klebstoff auf den besagten Linsenblock (114) neben einer Betriebsstation der besagten Stationen (120).

15. Eine Maschine nach Anspruch 12, dadurch gekennzeichnet, daß die besagte Linsenblock-Halteeinrichtung einen mehrstufigen, relativ schaltbaren Haltetisch (102) einschließt, der mindestens eine drehbare Linsenblock-Spindeleinrichtung (104) einschließt, sowie eine Einrichtung (150) zum Aufbringen einer vorherbestimmten Klebstoffmenge auf einem innerhalb der besagten Linsenblock-Spindeleinrichtung (104) positionierten Linsenblock (114), eine verschiebbare Halteeinrichtung für halbfertige Linsen (128) zur Sicherung der besagten, halbfertigen Linse (34) und Verlagern derselben auf unmittelbaren Kontakt mit dem innerhalb der besagten Linsenblock-Spindeleinrichtung (104) positionierten Linsenblock (114), und eine Einrichtung zum Drehen der besagten Linsenblock-Spindeleinrichtung (104), wenn die besagte halbfertige Linse (34) und der Linsenblock (114), welche den besagten Klebstoff tragen, in besagtem unmittelbarem Kontakt stehen.

16. Eine Maschine nach Anspruch 15, dadurch gekennzeichnet, daß die besagte verschiebbare Halteeinrichtung eine Spanneinrichtung (128) für die Aufnahme und genaue Positionierung der besagten halbfertigen Linse (34) umfaßt, wobei die besagte hintere Oberfläche (A) nach auswärts davon ausgerichtet ist, und eine Einrichtung (130, 132, 133) zum vertikalen Verschieben der besagten Spanneinrichtung (128) zur Herbeiführung des besagten unmittelbaren Kontaktes.

17. Eine Maschine nach einem der vorausgehenden Ansprüche, gekennzeichnet durch eine automatische Ladeeinrichtung zur Einführung der besagten Vorläufer in die besagte Spindel (16).

18. Eine Maschine nach Anspruch 17, dadurch gekennzeichnet, daß die besagte Ladeeinrichtung ein Kastenspeiser-Ladeelement umfaßt, und daß die besagte Spindel (16) eine Einsatzhülse (24) zur Aufnahme des besagten Vorläufers (34) von dem besagten Ladeelement einschließt.

19. Eine Methode der Ausbildung einer Linse, die für unmittelbaren Kontakt mit einem Augapfel angepaßt ist, durch Ausbildung einer Vielzahl optischer Flächen auf einem optischen Linsenvorläufer, jede durch einen oder mehrere Radien umgrenzt, umfassend das Tragen der besagten Vorläufer in einem Halter auf einer drehbaren Spindel und das automatische Schalten eines auf einem ersten Schlitten montierten Schneidwerkzeugs in Kontakt mit dem rotierenden Vorläufer, um dadurch die besagten optischen Flächen zu generieren, gekennzeichnet durch die Montage der Spindel (16) auf einem zweiten, flüssigkeitsgelagerten Schlitten (14a), der für eine geradlinige Translation entlang einer orthogonal zu einer ersten Achse verlaufenden Achse montiert ist, entlang welcher der erste Schlitten (14), der flüssigkeitsgetragen ist, geradlinig verschiebbar ist, und durch die Herbeiführung einer vorherbestimmten, koordinierten Bewegung durch die besagte automatisch schaltende Einrichtung auf die besagten ersten und zweiten Schlitten (14, 14a) entlang ihren jeweiligen Achsen, um die besagten Flächen zu generieren.

20. Eine Methode nach Anspruch 19, gekennzeichnet durch Steuerung der besagten koordinierten geradlinigen Translation mittels eines Computers (12).

21. Eine Methode nach Anspruch 19 oder 20, gekennzeichnet durch Generierung der besagten optischen Fläche entlang einem vorherbestimmten Weg abgegrenzter Auflösung.

22. Eine Methode nach Anspruch 20 oder 21, gekennzeichnet durch Generierung der besagten optischen Fläche mittels sowohl Schruppschnitten wie auch Präzisions-Schlichtschnitten.

**Revendications**

1. Appareil permettant de façonner sur un précurseur plusieurs surfaces optiques, chacune définie par un ou plusieurs rayons, pour produire une lentille apte au contact rapproché avec le globe oculaire, se composant d'une première coulisse (14) supportant un outil de coupe (22), d'une broche rotative dotée d'un porte-précurseur (24) et d'un dispositif permettant d'indexer automatiquement ledit outil de coupe pour l'amener en contact avec un précurseur maintenu dans ledit porte-précurseur (24), ledit précurseur étant mis en rotation par ladite broche (16) pour l'obtention desdites surfaces optiques, le tout caractérisé en ce que la première coulisse est une coulisse à paliers fluides (14) montée pour un mouvement de translation rectiligne le long d'un premier axe, en ce que ladite broche rotative (16) est portée par une deuxième coulisse à paliers fluides (14a) montée pour un mouvement de translation rectiligne le long d'un deuxième axe perpendiculaire au premier et en ce que ledit dispositif automatique d'indexage (12) assure un déplacement coordonné et prédéterminé des première et deuxième coulisses (14, 14a) le long de leur axe respectif.

2. Une machine selon la revendication 1 caractérisée en ce que ledit porte-précurseur comporte une bague d'air (24).

3. Une machine selon les revendications 1 ou 3 caractérisée en ce que la première coulisse (14) porte divers outils de coupe (22, 22a).

4. Une machine selon les revendications 1, 2 ou 3 caractérisée par un dispositif de translation du ou des outil(s) de coupe (22, 22a) dans une direction perpendiculaire au premier et au deuxième axe déjà mentionnés.

5. Une machine selon l'une quelconque des revendications qui précèdent caractérisée en ce que ladite broche rotative (16) est une broche à palier pneumatique.

6. Une machine selon l'une quelconque des revendications qui précèdent caractérisée en ce que ledit dispositif automatique d'indexage comporte un ordinateur de commande (12).

7. Une machine selon l'une quelconque des revendications qui précèdent caractérisée en ce que le ou les outil(s) de coupe (22, 22a) comportent une pointe diamantée ayant une surface de coupe circulaire présentant une tolérance de circularité de 0,0127 cm.

8. Une machine selon l'une quelconque des revendications qui précèdent caractérisée en ce que ledit dispositif automatique d'indexage comporte des codeurs présentant un pouvoir de résolution inférieur ou égal à 0,5 microns.

9. Une machine selon l'une quelconque des revendications qui précèdent caractérisée par un moyen permettant de maintenir le jeu radial et axial de la broche rotative à pas plus de 0,000025 cm du jeu total indiqué.

10. Une machine selon l'une quelconque des revendications qui précèdent caractérisée par un dispositif d'affichage vidéo (32, 33) et des caméras associées (30, 30a) permettant de visionner une image agrandie du ou des outil(s) de coupe par rapport au précurseur.

11. Une machine selon l'une quelconque des revendications qui précèdent mais munie en outre d'une table traçante.

12. Une machine selon l'une quelconque des revendications qui précèdent caractérisée par un dispositif de fixation du bloc lenticulaire (100) appelé à recevoir un précurseur semi-fini dont la face postérieure (A) a été façonnée par ledit outil de coupe (22, 22a) et à monter automatiquement ledit précurseur semi-fini sur un bloc lenticulaire (114) avant son retour sur ladite broche rotative (16) en vue de l'usinage de sa face antérieure (B).

13. Une machine selon la revendication 12 caractérisée en ce que ledit dispositif de fixation du bloc lenticulaire (100) comporte un tourniquet (102) présentant plusieurs postes de travail (120) en diverses positions angulaires, chacun doté d'un dispositif de support (128) d'une lentille semi-finie, d'un dispositif de préhension (112) du bloc lenticulaire (114) et d'un dispositif de mise en mouvement relatif (132) dudit dispositif de support (128) et dudit dispositif de préhension (112) pour le dépôt de ladite lentille sur ledit bloc (114).

14. Une machine selon la revendication 13 caractérisée par un dispositif (150) permettant de déposer automatiquement un adhésif sur ledit bloc lenticulaire (114), à proximité de l'une des positions desdits postes de travail (120).

15. Une machine selon la revendication 12 caractérisée en ce que ledit dispositif de fixation du bloc lenticulaire comporte un plateau de fixation multi-positions indexable (102) avec au moins un dispositif à broche rotative (104), pour bloc lenticulaire, un dispositif (150) permettant de déposer une quantité prédéterminée d'adhésif sur un bloc lenticulaire (114) positionné sur ledit dispositif à broche rotative (104), un dispositif de serrage mobile (128) pour la fixation de ladite lentille semi-finie (34) et sa mise en contact avec le bloc lenticulaire (114) positionné sur ledit dispositif à broche rotative (104), et un dispositif de mise en rotation du dispositif à broche rotative (104) lorsque ladite lentille semi-finie (34) et ledit bloc lenticulaire (114) portant ledit adhésif sont en contact.

16. Une machine selon la revendication 15 caractérisée en ce que ledit dispositif de serrage mobile comporte une douille (128) destinée à recevoir et à positionner avec précision ladite lentille semi-finie (34), surface postérieure (A) vers l'extérieur, et des dispositifs (130, 132, 133) pour le déplacement vertical de ladite douille (128) en vue d'obtenir ledit contact.

17. Une machine selon l'une quelconque des revendications qui précèdent caractérisé par un dispositif de chargement automatique pour l'introduction desdits précurseurs dans ladite broche (16).

18. Une machine selon la revendication 17 caractérisée en ce que ledit dispositif de chargement comporte une trémie d'alimentation à bras d'amenée et en ce que ladite broche (16) comprend une bague (24) detinée à recevoir ledit précurseur (34) dudit bras d'amenée.

19. Une méthode de mise en forme d'une lentille cornéenne par façonnage sur un précurseur de plusieurs surfaces optiques chacune définie par un ou plusieurs rayon(s), avec support desdits précurseurs dans un porte-précurseur sur une broche rotative et indexage automatique d'un outil de coupe monté sur une première coulisse pour sa mise en contact avec le précurseur en rotation et, de là, pour la production desdites surfaces optiques, méthode caractérisée par le montage de la broche (16) sur une deuxième coulisse (14a) à paliers fluides agencée pour un mouvement de translation rectiligne le long d'un axe perpendiculaire à celui emprunté par la première coulisse (14) elle-même à paliers fluides et à translation rectiligne, et par la transmission dudit dispositif d'indexage automatique (12) d'un mouvement coordonné et prédéterminé auxdites première et deuxième coulisses (14, 14a) dans le sens de leur axe respectif en vue de l'obtention desdites surfaces optiques.

20. Une méthode selon la revendication 19 caractérisée par un contrôle dudit mouvement de translation rectiligne coordonné au moyen d'un ordinateur (12).

21. Une méthode selon la revendication 19 ou 20 caractérisée par la génération desdites surfaces optiques le long d'une trajectoire prédéterminée à pouvour de résolution infini.

22. Une méthode selon la revendication 20 ou 21 caractérisée par le génération desdites surfaces optiques par taille de dégrossissage et taille de finition.

Fig.1.

**0 006 883**

STEP 1 → CENTERLESS GRIND ROD AND CUT LENS BLANK

STEP 2 → ASSEMBLE IN AIR COLLET AND MACHINE POSTERIOR CURVES

POLISH POSTERIOR CURVES (OPTIONAL)

STEP 3 → SPRAY PITCH BLOCK OR BLANK WITH HOT PITCH AND ADHERE POSTERIOR CURVE OF LENS BLANK TO PITCH BLOCK

STEP 4 → SECURE PITCH BLOCK WITH LENS BLANK ATTACHED IN LATHE AND MACHINE ANTERIOR CURVES

POLISH ANTERIOR CURVES (OPTIONAL)

STEP 5 → REMOVE COMPLETED LENS FROM PITCH BLOCK

_Fig. 2._

2

# 0 006 883

**Fig.3.**

**Fig.5.**

**Fig.6.**

Fig. 4.

OPTICAL ZONE
(SPHERICAL, OR CURVE CORRECTED
TO ELIMINATE SPHERICAL ABERRATION)

POWER CURVE

OPTIONAL
CONCENTRICS
FOR "ADD"

TRANSFER ZONE
(SMOOTH JUNCTURE)

LENTICULAR

BASE CURVE
(TO MATCH EYE, WHETHER
SPHERICAL OR ASPHERIC)

EDGE
(SMOOTH & ROUNDED)

SMOOTH
BEND

PERIPHERAL CURVE

_Fig. 7._

0006 883